# EUROPÄISCHE PATENTSCHRIFT

(11) **EP 0 543 385 B1**
(45) Veröffentlichungstag und Bekanntmachung des Hinweises auf die Patenterteilung: **18.01.1995**
(21) Anmeldenummer: 92119749.7
(22) Anmeldetag: 19.11.1992
(51) Int. Cl.: C09D 11/10, B41M 1/22

(54) **Drucklack auf Wasserbasis**
Water-based printing ink
Encre d'imprimerie à base d'eau

(30) Priorität: 19.11.1991 DE 4138073
(43) Veröffentlichungstag der Anmeldung: 26.05.1993
(73) Patentinhaber: JOACHIM DYES LACKFABRIK GmbH, D-31257 Lehrte (DE)
(72) Erfinder: Günsel, Rolf, W-3000 Hannover 71 (DE); Melzer, Uta, W-3004 Isernhagen 2 (DE)
(74) Vertreter: Säger, Manfred, Dipl.-Ing.

(56) Entgegenhaltungen:
- US-A- 3 560 417

## Beschreibung

Die vorliegende Erfindung betrifft einen neuartigen Drucklack auf Wasserbasis, der insbesondere für Gold- und Silberfarben geeignet ist.

Das Bedrucken von Papier oder Kartonagen mit Gold- bzw. Silberfarben ist schwierig, insbesondere, wenn Offset-Druckverfahren verwendet werden sollen. Im allgemeinen wird so vorgegangen, daß in einem zusätzlichen Arbeitsgang eine Broncier-Unterdruckfarbe maschinell auf den Druckbogen aufgetragen wird. Auf diese Farbe wird anschließend auf eine Bronciermaschine im gleichen Arbeitsgang ein Bronzepulver eingestäubt. Durch die nachfolgende Farbtrocknung wird der sogenannte Bronzeschliff auf dem Druckbogen gebunden. Nach der Trocknung wird der Druckbogen mit Lösungsmittel-, Wasser- oder UV-Lack überlackiert, um die mehr oder minder losen Bronzeteilchen zu fixieren.

Ein Nachteil dieser Vorgehensweise ist, daß zur Fixierung des Metallschliffes ein zusätzlicher Lackiervorgang erforderlich ist. Die verwendeten Metallschliffstäube können außerdem zu einer Gesundheitsgefährdung am Arbeitsplatz führen. Auch ist eine Verschmutzung der Maschinen und Druckprodukte in der Druckerei in Kauf zu nehmen. Trotzdem ist diese recht umständliche Vorgehensweise bisher verwendet worden, da das Druckergebnis von hoher optischer Qualität ist.

Bei der Verwendung von Goldfirnisfarben wird eine Ein- oder Zwei-Komponenten-Goldfarbe beispielsweise mittels einer Bogenoffset-Maschine Naß-in-Naß auf den Druckbogen aufgebracht. Da die Druckbögen im allgemeinen anschließend direkt weiterverarbeitet werden, ist auch hierbei eine nachträgliche Lackierung erforderlich, um eine gute Scheuerfestigkeit zu erzielen.

Bei dieser Naß-in-Naß-Auftragsweise ist ein durch die Lackierung hervorgerufener Verlust an Brillanz der Goldfarben nachteilig. Außerdem neigt der Metallschliff der Goldfarbe durch Feuchtigkeitsaufnahme zur Oxidation, was zu einem Glanzverlust sowie zu einer Farbtonveränderung im Sinne einer Schwärzung führt.

Auch bei Silberdruckfarben treten ähnliche Probleme wie bei den Goldfarben auf. Auch hier ist die Scheuerfestigkeit nur dann befriedigend, wenn eine nachträgliche Lackierung durchgeführt wird.

Aufgabe der vorliegenden Erfindung ist die Schaffung von Druckfarben auf Wasserbasis, mit denen Gold- und Silberfarben, Bronzen und dergleichen in einem einzigen Arbeitsgang aufgetragen werden können, ohne daß nachteilige Farbtonveränderungen, Verlust an Brillanz und Glanz auftreten, die eine hohe Scheuerfestigkeit aufweisen und in den unterschiedlichsten Druckverfahren Verwendung finden können.

Gelöst wird diese Aufgabe durch einen Drucklack gemäß dem Hauptanspruch, wobei die Unteransprüche bevorzugte Ausgestaltungen der Erfindung wiedergeben. Die Verfahrensansprüche betreffen Druckverfahren, in denen sich die erfindungsgemäßen Drucklacke einsetzen lassen.

Die erfindungsgemäßen Drucklacke sind auf der Grundlage von Styrol-Methacrylsäureester-Copolymeren, Vinylpropionat-Vinylpyrrolidon-Copolymeren und/oder Methacrylatestern konzipiert. Solche Copolymere sind bekannt, es ist aber überraschend₁ daß im Gegensatz zu anderen Polymeren für wäßrige Lacke bei Styrol-Methacrylester-Copolymeren beim Einsatz von Gold- oder Silberfarben die oben erwähnten Nachteile, insbesondere Verlust an Brillanz und Glanz sowie mangelnde Abriebfestigkeit, nicht auftreten. Somit eröffnen die erfindungsgemäßen Drucklacke erstmals die Möglichkeit, Gold- und Silberfarben in wäßrigen Lacken in einem einzigen Arbeitsgang mit den unterschiedlichsten Druckmaschinen zu verarbeiten.

Die erfindungsgemäßen Styrol-Methacrylsäureester-Copolymeren enthalten etwa 60 bis 95 Gew.-% Styrol und etwa 5 bis 40 Gew.-% Methacrylsäureester, bezogen auf die Gesamtmenge der Polymeren. Bevorzugt ist eine Zusammensetzung, die etwa 70 bis 90 Gew.-% Styrol und etwa 10 bis 30 Gew.-% Methacrylsäureester enthält. Als Methacrylsäureester werden die Ester von Methacrylsäure mit Alkoholen mit 1 bis 4 Kohlenstoffatomen bevorzugt, insbesondere werden die Methylester verwendet. Die in den erfindungsgemäßen Drucklacken verwendeten Copolymeren werden sowohl in Form wäßriger Dispersion als auch in Form von Festharz eingesetzt. In den wäßrigen Dispersionen haben die Copolymeren wohl Gewichte von mehr als 100.000, bevorzugt von mehr als 200.000, ihre Säurezahl liegt unter 150, bevorzugt unter 100, und insbesondere zwischen 70 und 100. Der Wassergehalt solcher wäßrigen Copolymerdispersionen liegt zwischen 60 und 50 Gew.-%.

Die als Festharz eingesetzten Copolymeren weisen Mol-Gewichte unter 100.000 auf, bevorzugt unter 50.000. Ihre Säurezahl liegt über 150, bevorzugt im Bereich von 150 bis 300 und besonders bevorzugt im Bereich von 150 bis 250. Der Wassergehalt dieser Festharze ist so gering, daß er vernachlässigt werden kann.

Die erfindungsgemäßen Drucklacke können 1 bis 60 Gew.-% einer wäßrigen Dispersion von Styrol-Methacrylsäureester-Copolymer enthalten.

Beim Einsatz in Farbwerken von Offset-Druckmaschinen und dergleichen und ähnlichen Vorrichtungen, bei denen eine hohe Viskosität erwünscht ist, beträgt der Gehalt an wäßriger Dispersion im allgemeinen 1 bis 30 Gew.-%, bevorzugt 5 bis 12 Gew.-% und insbesondere 6 bis 10 Gew.-%.

An Styrol-Methacrylsäureester-Copolymer in Form von Festharz werden 1 bis 40 Gew.-% eingesetzt, beim Einsatz in Farbwerken, z.B. von Offset-Druckmaschinen und dergleichen oder ähnlichen Vorrichtungen, beträgt der Gehalt an Festharz insbesondere 5 bis 40 Gew.-%, bevorzugt 10 bis 15 Gew.-% und besonders bevorzugt 10 bis 12 Gew.-%.

Das als Festharz eingesetzte StyrolMethacrylsäureester-Copolymer kann ganz oder teilweise durch Vinylpropionat-Vinylpyrrolidon-Copolymer oder Methacrylatester von Alkoholen mit 1 bis 4 Kohlenstoffatomen ersetzt werden, wobei die eingesetzte Gesamtmenge unverändert bleibt.

Beim Einsatz der erfindungsgemäßen Lacke in Lackieraggregaten, Lackiermaschinen, separaten Lackierwerken bzw. Leim oder Lackierwerken von Rollenoffset-Maschinen sollten die Lacke im allgemeinen eine niedrigere Viskosität aufweisen. Demgemäß sind auch die Gehalte bei diesem Anwendungszweck unterschiedlich von dem weiter oben genannten. Der Gehalt an wäßriger Dispersion beträgt bei diesem Anwendungszweck im allgemeinen 1 bis 50 Gew.-%, bevorzugt 3 bis 30 Gew.-% und besonders bevorzugt 25 bis 30 Gew.-%. Der Gehalt an Festharz beträgt im allgemeinen 1 bis 40 Gew.-%, bevorzugt 3 bis 30 Gew.-% und besonders bevorzugt 3 bis 25 Gew.-%, insbesondere 3 bis 10 Gew.-%.

Die erfindungsgemäßen Drucklacke können weiterhin Glykole, Alkohole oder Glykolether/etherester als Feuchthaltemittel enthalten. Als Glykole werden beispielsweise Ethylenglykole, Propylenglykole, oder Butylenglykole eingesetzt. Bevorzugt wird 1,2-Propylenglykol verwendet. Bei der Verwendung der Drucklacke beispielsweise in Farbwerken ist die Anwesenheit von Feuchthaltemitteln zwingend erforderlich. Der Gehalt an Feuchthaltemitteln kann beim Einsatz in Farbwerken und dergleichen bis 60 Gew.-% betragen, im allgemeinen beträgt er 5 bis 40 Gew.-%, bevorzugt 10 bis 30 Gew.-% und insbesondere 15 bis 25 Gew.-%. Beim Einsatz der Drucklacke in Lackieraggregaten und dergleichen kann der Gehalt ebenfalls bis zu 60 Gew.-% betragen, bevorzugt 0 bis 30 Gew.-%, besonders bevorzugt 0,01 bis 15 Gew.-% und insbesondere bevorzugt 0,5 bis 5 Gew.-%.

Zur Verbesserung der Oberflächenaktivität enthalten die Drucklacke weiterhin Netzmittel. Als Netzmittel werden vorzugsweise Sulfosuccinate oder Polyurethan-Blockcopolymere verwendet. Der Gehalt an Netzmitteln beträgt 0,1 bis 30 Gew.-%. Beim Einsatz in Farbwerken und dergleichen beträgt der Gehalt vorzugsweise 0,5 bis 15 Gew.-%, besonders bevorzugt 1 bis 8 Gew.-% und insbesondere 1 bis 3 Gew.-%. Beim Einsatz in Lackieraggregaten und dergleichen beträgt der Gehalt bevorzugt 0,1 bis 30 Gew.-%, besonders bevorzugt 1 bis 10 Gew.-% und insbesondere 2 bis 6 Gew.-%.

Zur Neutralisation der im Copolymer enthaltenen Säuren enthalten die erfindungsgemäßen Drucklacke Neutralisationsmittel, wobei hierfür die üblicherweise in solchen Polymeren verwendeten alkalischen Stoffe, wie Amine, Ammoniak usw. verwendet werden. Der Gehalt an Neutralisationsmitteln beträgt in Abhängigkeit vom Säuregehalt im allgemeinen 0,1 bis 30 Gew.-%. Beim Einsatz in Farblacken und dergleichen kann der Gehalt an Neutralisationsmitteln 0,5 bis 15 Gew.-% betragen, bevorzugt 1 bis 8 Gew.-% und besonders bevorzugt 1 bis 5 Gew.-%. Beim Einsatz in Lackieraggregaten und dergleichen beträgt der Gehalt im allgemeinen 0,1 bis 20 Gew.-%, bevorzugt 1 bis 10 Gew.-% und besonders bevorzugt 5 bis 10 Gew.-%. Wie die obigen Werte zeigen, müssen bei Drucklacken, die für die Verwendung in Lackieraggregaten gedacht sind, wegen der höheren Säurezahl der eingesetzten Acrylate, d.h. wegen der höheren Anteile der entsprechenden Acrylate, auch die als Neutralisationsmittel eingesetzten Mengen größer sein.

Zur Erhöhung der Abriebfestigkeit enthalten die erfindungsgemäßen Drucklacke natürliche und/oder synthetische Wachse. Solche Wachse sind beispielsweise Polyethylenwachse, Carnaubawachse usw.. Ihr Gehalt beträgt im allgemeinen 0,1 bis 30 Gew.-%. Beim Einsatz in Farbwerken und dergleichen kann der Gehalt 0,5 bis 15 Gew.-% betragen, bevorzugt 1 bis 8 Gew.-% und besonders bevorzugt 1 bis 5 Gew.-%. Beim Einsatz in Lackieraggregaten kann der Gehalt 0,1 bis 15 Gew.-% betragen, bevorzugt 0,1 bis 10 Gew.-% und besonders bevorzugt 0,5 bis 5 Gew.-%.

Zur Vermeidung einer übermäßigen Schaumbildung enthalten die erfindungsgemäßen Drucklacke Entschäumer, beispielsweise die für diesen Zweck üblichen Silikonentschäumer. Ihr Gehalt beträgt im allgemeinen 0,001 bis 2 Gew.-%. Beim Einsatz in Lackierwerken und dergleichen beträgt der Gehalt im allgemeinen 0,001 bis 1 Gew.-%, bevorzugt 0,005 bis 0,15 Gew.-% und besonders bevorzugt 0,005 bis 0,02 Gew.-%. Beim Einsatz in Lackieraggregaten und dergleichen beträgt der Gehalt im allgemeinen 0,005 bis 1 Gew.-%, bevorzugt 0,01 bis 0,15 Gew.-%.

Der Wassergehalt der erfindungsgemäßen Drucklacke kann in weiten Grenzen schwanken. Er liegt zwischen 0 bis 80 Gew.-%. Drucklacke für den Einsatz in Farbwerken und dergleichen enthalten im allgemeinen 0 bis 40 Gew.-%, bevorzugt 5 bis 20 Gew.-%. Für den Einsatz in Lackieraggregaten enthalten sie im allgemeinen 1 bis 70 Gew.-%, bevorzugt 3 bis 30 Gew.-% und besonders bevorzugt 3 bis 20 Gew.-%. Die erfindungsgemäßen Drucklacke sind insbesondere für das Drucken mit Gold- und Silberfarben gedacht. Solche Lacke enthalten als Farbstoffe bzw. Pigmente die hierfür üblichen Metallschliffstäube, Bronzeschliffpulver, Kupferlegierungen, Goldfirnispigmente, Silberdruckfarben, Aluminiumpigmentpasten, eventuell mit organischen Farbstofflösungen, Glimmerpigmente (Iriodine) und dergleichen.

Die erfindungsgemäßen Drucklacke eignen sich beispielsweise für den Einsatz in Farbwerken von Bogen- oder Rollenoffset-Maschinen. Dabei läßt sich beispielsweise Papier oder Karton in einem einzigen Arbeitsgang mit beispielsweise einer Goldfarbe bedrucken und lackieren, ohne daß die Goldfarbe an Brillanz oder Glanz verliert. Dabei weist die bedruckte Oberfläche eine höhere Scheuerfestigkeit auf.

Andererseits läßt sich der erfindungsgemäße Drucklack auch in separaten Lackieraggregaten von Offset-Druckmaschinen und dergleichen, wie umgebaute Feuchtwerke, Hebefeuchtwerke, Alkoholfeuchtwerke, auf Leim- oder Lackwerken in Rollenoffset-Maschinen, Lackiermaschinen, wie z.B. Billhöfer sowie in Tief- oder Flexodruck-Maschinen einsetzen.

Entsprechend den obigen Angaben weisen die erfindungsgemäßen Drucklacke folgende Zusammensetzung auf, wobei die Zusammensetzung im folgenden in Gewichts-Teilen (Gew.-Teilen) angegeben wird, da sich die angegebenen Mengen nicht in allen Fällen zu 100% ergänzen. Die Angabe der Gew.-Teile bezieht sich auf den Gew.-Anteil des Bestandteils an der Summe des Gesamtgewichts. Es versteht sich, daß innerhalb einer Rezeptur alle Gew.-Angaben sich auf gleiche Gew.-Einheiten beziehen.

Die erfindungsgemäßen Drucklacke haben die folgende Zusammensetzung:
1 bis 60 Gew.-Teile Styrol-Methacrylsäureester-Copolymer, oder C₁-C₄-Methacrylatester, als wäßrige Dispersion
1 bis 40 Gew.-Teile Styrol-Methacrylsäureester-Copolymer, oder Vinylpropionat/Vinylpyrrolidon-Copolymere oder C₁-C₄-Methacrylatester als neutralisierbare wasserlösliche Festharze,
0 bis 60 Gew.-Teile Glykole oder Alkohole oder Glykolether/etherester
0,1 bis 30 Gew.-Teile Netzmittel
0,1 bis 30 Gew.-Teile Neutralisationsmittel
0,1 bis 30 Gew.-Teile natürliche und/oder synthetische Wachse
0,001 bis 2 Gew.-Teile Entschäumer
0 bis 80 Gew.-Teile Wasser
1 bis 80 Gew.-Teile Aluminium-, Glimmer- und/oder Goldbronze-Pigmente
Für den Einsatz in Farbwerken, beispielsweise von Offset-Druckmaschinen und dergleichen haben die Drucklacke die folgende Zusammensetzung:
1 bis 30 Gew.-Teile Styrol-Methacrylsäureester-Copolymer, oder C₁-C₄-Methacrylatester, als wäßrige Dispersion,
5 bis 40 Gew.-Teile Styrol-Methacrylsäureester-Copolymer, oder Vinylpropionat/Vinylpyrrolidon-Copolymer oder C₁-₄-Methacrylatester als neutralisierbare wasserlösliche Festharze,
5 bis 40 Gew.-Teile Glykole oder Alkohole oder Glykolether/etherester
0,5 bis 20 Gew.-Teile Netzmittel
0,5 bis 15 Gew.-Teile Neutralisationsmittel,
0,5 bis 15 Gew.-Teile Wachse
0,001 bis 1 Gew.-Teil Entschäumer
0 bis 40 Gew.-Teile Wasser
10 bis 60 Gew.-Teile Aluminium-, Glimmer- und/oder Goldbronze-Pigmente.

Für den gleichen Einsatz ist folgende Zusammensetzung bevorzugt:
5 bis 12 Gew.-Teile Styrol-Methacrylsäureester-Copolymer, oder C₁-C₄-Methyacrylatester, als wäßrige Dispersion
10 bis 15 Gew.-Teile Stryrol-Methacrylsäureester-Copolymer, oder Vinylpropionat/Vinylpyrrolidon-Copolymere oder C₁-C₄-Methacrylatester als neutraliserbare wasserlösliche Festharze
10 bis 30 Gew.-Teile Glykole oder Alkohole oder Glykolether/etherester
1 bis 8 Gew.-Teile Netzmittel
1 bis 8 Gew.-Teile Neutralisationsmittel
1 bis 8 Gew.-Teile Wachse
0,005 bis 0,15 Gew.-Teile Entschäumer
5 bis 20 Gew.-Teile Wasser
20 bis 50 Gew.-Teile Aluminium-, Glimmer- und/oder Goldbronze-Pigmente.

Insbesondere ist folgende Zusammensetzung bevorzugt:
6 bis 10 Gew.-Teile Styrol-Methacrylsäureester-Copolymer` oder C₁-C₄-Methacrylatester, als wäßrige Dispersion
10 bis 13 Gew.-Teile Styrol-Methacrylsäureester-Copolymer, oder Vinylpropionat/Vnylpyrrolidon-Copolymere oder C₁-C₄-Methacrylatester als neutralisierbare wasserlösliche Festharze
15 bis 25 Gew.-Teile Glykole oder Alkohole oder Glykolether/etherester
1 bis 3 Gew.-Teile Netzmittel
1 bis 5 Gew.-Teile Neutralisationsmittel
1 bis 5 Gew.-Teile Wachse
0,005 bis 0,02 Gew.-Teile Entschäumer
5 bis 20 Gew.-Teile Wasser
25 bis 45 Gew.-Teile Aluminium-, Glimmer- und/oder Goldbronze-Pigmente.

Für den Einsatz in Lackieraggregaten und dergleichen wird im allgemeinen folgende Zusammensetzung verwendet:
1 bis 50 Gew.-Teile Stryrol-Methacrylsäureester-Copolymer, oder C₁-C₄-Methacrylatester, als wäßrige Dispersion
1 bis 40 Gew.-Teile Styrol-Methacrylsäureester-Copolymer, oder Vinylpropionat/Vinylpyrrolidon-Copolymer oder C₁-C₄-Methacrylatester als neutralisierbare wasserlösliche Festharze
0 bis 30 Gew.-Teile Glykole oder Alkohole oder Glykolether/etherester
0,1 bis 30 Gew.-Teile Netzmittel
0,1 bis 20 Gew.-Teile Neutralisationsmittel
0,1 bis 15 Gew.-Teile Wachse
0,005 bis 1 Gew.-Teile Entschäumer
1 bis 70 Gew.-Teile Wasser
10 bis 60 Gew.-Teile Aluminium-, Glimmer- und/oder Goldbronze-Pigmente.

Bevorzugt ist für diesen Einsatz die folgende Zusammensetzung:
3 bis 30 Gew.-Teile Styrol-Methacrylsäureester-Copolymer, oder C₁-C₄-Methacrylatester, als wäßrige Dispersion
3 bis 30 Gew.-Teile Styrol-Methacrylsäureester-Copolymer, oder Vinylpropionat/Vinylpyrrolidon-Copolymer oder C₁-C₄-Methacrylatester als neutralisierbare wasserlösliche Festharze
0,01 bis 15 Gew.-Teile Glykole oder Alkohole oder Glykolether/etherester
1 bis 20 Gew.-Teile Netzmittel
1 bis 10 Gew.-Teile Neutralisationsmittel
0,1 bis 10 Gew.-Teile Wachse
0,01 bis 0,15 Gew.-Teile Entschäumer
3 bis 30 Gew.-Teile Wasser
20 bis 50 Gew.-Teile Aluminium-, Glimmer- und/oder Goldbronze-Pigmente.

Besonders bevorzugt ist für diesen Einsatz die folgende Zusammensetzung:
25 bis 30 Gew.-Teile Styrol-Methacrylsäureester-Copolymer, oder C₁-C₄-Methacrylatester, als wäßrige Dispersion
20 bis 25 Gew.-Teile Styrol-Methacrylsäureester-Copolymer, oder Vinylpropionat/Vinylpyrrolidon-Copolymere oder C₁-C₄-Methacrylatester als neutralisierbare wasserlösliche Festharze
0,5 bis 5 Gew.-Teile Glykole oder Alkohole oder Glykolether/ etherester
2 bis 6 Gew.-Teile Netzmittel
5 bis 10 Gew.-Teile Neutralisationsmittel
0,5 bis 5 Gew.-Teile Wachse
0,01 bis 0,15 Gew.-Teile Entschäumer
3 bis 20 Gew.-Teile Wasser
40 bis 50 Gew.-Teile Aluminium-, Glimmer- und/oder Goldbronze-Pigmente.

Die erfindungsgemäßen Drucklacke lassen sich zum Bedrucken von Papier, Pappe, Kartonagen und dergleichen verwenden, wobei der Drucklack beispielsweise über ein Farbwerk einer Bogen- oder Rollenoffset-Maschine in einem einzigen Arbeitsgang ohne nachfolgende Lackierung aufgetragen wird. Desgleichen kann der Drucklack auch aus Feuchtwerken, separaten Lackieraggregaten von Bogen- oder Rollenoffset-Druckmaschinen, Bogenlackiermaschinen, Tief- oder Flexodruckmaschinen in einem einzigen Arbeitsgang ohne nachfolgende Lackierung aufgetragen werden.

Die Erfindung wird nachfolgend anhand von Beispielen näher erläutert.

### Beispiel 1

Durch Vermischen der Bestandteile wird ein Drucklack folgender Zusammensetzung hergestellt:

| | Gew.-Teile |
|---|---|
| Acrylat-Styrol-Copolymer (Mol-Gewicht 200.000) Säurezahl 90, wäßrige Dispersion | 8 |
| Acrylat-Styrol-Copolymer (Mol-Gewicht 1.000-40.000) Säurezahl 200 , Festharz | 12 |
| Netzmittel | 2 |
| Alkohole und Glykole | 20 |
| DEA/NH₃ -Neutralisationsmittel | 3 |
| Wachse | 2 |
| Entschäumer | 0,01 |
| Pigmente/Farbstoffe | 3 |
| Wasser | 10 |
| Aluminiumpigmentpaste (65% Al) f.d. Einsatz im wäßrigen Bereich | 40 |

Der Drucklack wird über das Farbwerk einer Bogenoffset-Maschine in einem einzigen Arbeitsgang ohne nachfolgende Lackierung auf Papier aufgetragen. Das Druckerzeugnis zeigt keinen Verlust an Glanz und Brillanz, die Abriebbeständigkeit ist hoch.

### Beispiel 2

Durch Vermischen der Bestandteile wird ein Wasserlack folgender Zusammensetzung hergestellt:

| | Gew.-Teile |
|---|---|
| Acrylat-Styrol-Copolymer (Mol-Gewicht 200.000), Säurezahl 90 | - |
| Acrylat-Styrol-Copolymer (Mol-Gewicht 1.000 bis 40.000), Säurezahl 200 | 15 |
| Netzmittel | 3 |
| Alkohole und Glykole | 1 |
| Amine und NH₃ | 5 |
| Wachse | 1 |
| Entschäumer | 0,05 |
| Wasser | 42 |
| Aluminiumpigmentpaste (65% Al) | 30 |
| Farbstoff/Pigmente | 3 |

Der Lack wurde mit einer Bogenlackiermaschine auf Papier aufgetragen. Er zeigte keinen Verlust an Glanz und Brillanz, die Abriebfestigkeit war gut.

### Beispiel 3

Durch Vermischen der Bestandteile wird ein Drucklack folgender Zusammensetzung hergestellt:

| | Gew.-Teile |
|---|---|
| Methylmethacrylatester, wäßrige Dispersion (Worléecryl 8415 von Worlée) | 5,0 |
| Vinylpropionat-Vinylpyrrolidon-Copolymer-Festharz (Collacral VL von BASF) Säurezahl | 7 |
| Netzmittel Polyurethan-Blockcopolymer (Disperbyk 182 von Byk) | 15 |
| Alkohole und Glykole | 25 |
| DEA/NH₃-Neutralisationsmittel | 3 |
| Wachse | 2 |
| Entschäumer | 0,01 |
| Pigmente/Farbstoffe | 3 |
| Wasser | 10 |
| Aluminiumpigmentpaste (65% Al) f.d. Einsatz im wäßrigen Bereich | 30 |

Der Drucklack wurde mit einer Bogenlackiermaschine auf Papier aufgetragen. Er zeigte keinen Verlust an Glanz und Brillianz, die Abriebsfestigkeit war gut.

### Beispiel 4

Durch Vermischen der Bestandteile wird ein Drucklack folgender Zusammensetzung hergestellt:

| | Gew.-Teile |
|---|---|
| Methylmethacrylester, wäßrige Dispersion (Worleecryl 8415 von Worlee) | 8 |
| Vinylpropionat-Vinylpyrrolidon-Copolymer-Festharz (Collacral VL von BASF) Säurezahl | 7 |
| Netzmittel (Disperbyk 182) | 15 |
| Alkohole und Glykole | 20 |
| DEA/NH₃ | 1 |
| Wachse | 2 |
| Entschäumer | 0,01 |
| Pigmente/Farbstoffe | 3 |
| Goldbronzedruckschliff | 45 |

Der Drucklack wurde mit einer Bogenlackiermaschine auf Papier aufgetragen. Er zeigte keinen Verlust an Glanz und Brillianz, die Abriebfestigkeit war gut.

### Beispiel 5

Beim Austausch der Vinylpropionat-Vinylpyrrolidon durch Methylmethacrylatester werden gleiche Ergebnisse erhalten.

### Beispiel 6

Durch Vermischen der Bestandteile wird ein Wasserlack folgender Zusammensetzung hergestellt:

| | Gew.-Teile |
|---|---|
| Methylmethacrylatester, wäßrige Dispersion, (Worléecryl 8415 von Worlée) | 4,5 |
| Methylmethacrylatester, Festharz (Zinpol 146 von Worlée) | 6,3 |
| Netzmittel Polyurethan | 13,5 |
| Alkohole und Glykole | 22,5 |
| Amine und NH₃ | 2 |
| Wachse | 2 |
| Entschäumer | 0,01 |
| Wasser | 19 |
| Aluminiumpigmentpaste (65 % Al) | 27 |
| Farbstoff/Pigmente | 3,2 |

Der Lack wurde mit einer Bogenlackiermaschine auf Papier aufgetragen. Er zeigte keinen Verlust an Glanz und Brillianz die Abriebsfestigkeit war gut.

### Beispiel 7

Durch Vermischen der Bestandteile wird ein Wasserlack folgender Zusammensetzung hergestellt:

| | Gew.-Teile |
|---|---|
| Methylmethacrlyatester, wäßrige Dispersion, (Worléecryl 8415 von Worlée) | 7,2 |
| Methylmethacrylatester, Festharz (Zinpol 146 von Worlee) | 6,3 |
| Netzmittel | 13 |
| Alkohole und Glykole | 18 |
| Amine und NH₃ | 1 |
| Wachse | 2 |
| Entschäumer | 0,01 |
| Wasser | 7,5 |
| Farbstoff/Pigmente | 3 |
| Goldbronzedruckschliff | 42 |

Der Lack wurde mit einer Bogenlackiermaschine auf Papier aufgetragen. Er zeigte keinen Verlust an Glanz und Brillianz, die Abriebsfestigkeit war gut.

## Patentansprüche

1. Drucklack auf Wasserbasis, insbesondere für Gold- und Silberfarben, enthaltend:
1 bis 60 Gew.-Teile Styrol-Methacrylsäureester-Copolymer, und/oder C₁ -C₄-Methacrylatester, als wäßrige Dispersion,
1 bis 40 Gew.-Teile Styrol-Methacrylsäureester-Copolymer und/oder Vinylpropionat/Vinylpyrrolidon-Copolymere und/oder C₁ -C₄-Methacrylatester als neutralisierbare wasserlösliche Festharze,
0 bis 60 Gew.-Teile Glykole oder Alkohole oder Glykolether/etherester
0,1 bis 30 Gew.-Teile Netzmittel
0,1 bis 30 Gew.-Teile Neutralisationsmittel
0,1 bis 30 Gew.-Teile natürliche und/oder synthetische Wachse
0,001 bis 2 Gew.-Teile Entschäumer
0 bis 80 Gew.-Teile Wasser
1 bis 60 Gew.-Teile Aluminium-, Glimmer- und/oder Goldbronze-Pigmente.

2. Drucklack nach Anspruch 1, insbesondere zur Verwenung in Farbwerken, z.B. von Offset-Druckmaschinen und dergleichen, enthaltend:
1 bis 30 Gew.-Teile Styrol-Methacrylsäureester-Copolymer, und/oder C₁-C₄-Methacrylatester, als wäßrige Dispersion,
5 bis 40 Gew.-Teile Styrol-Methacrylsäureester-Copolymer und/oder Vinylpropionat/Vinylpyrrolidon-Copolymere und/oder C₁-C₄-Methacrylatester als neutralisierbare wasserlösliche Festharze,
5 bis 40 Gew.-Teile Glykole oder Alkohole oder Glykolether/etherester
0,5 bis 20 Gew.-Teile Netzmittel
0,5 bis 15 Gew.-Teile Neutralisationsmittel
0,5 bis 15 Gew.-Teile Wachse
0,001 bis 1 Gew.-Teile Entschäumer
0 bis 40 Gew.-Teile Wasser
10 bis 60 Gew.-Teile Aluminium-, Glimmer- und/oder Goldbronze-Pigmente.

3. Drucklack nach den Ansprüchen 1 oder 2, enthaltend:
5 bis 12 Gew.-Teile Styrol-Methacrylsäureester-Copolymer, und/oder C₁-C₄-Methacrylatester, als wäßrige Dispersion,
10 bis 15 Gew.-Teile Styrol-Methacrylsäureester-Copolymer und/oder Vinypropioonat/Vinylpyrrolidon-Copolymere und/oder C₁ -C₄-Methacrylatester als neutralisierbare wasserlösliche Festharze,
10 bis 30 Gew.-Teile Glykole oder Alkohole oder Glykolether/etherester
1 bis 8 Gew.-Teile Netzmittel
1 bis 8 Gew.-Teile Neutralisationsmittel
1 bis 8 Gew.-Teile Wachse
0,005 bis 0,15 Gew.-Teile Entschäumer
5 bis 20 Gew.-Teile Wasser
20 bis 50 Gew.-Teile Aluminium-, Glimmer- und/oder Goldbronze-Pigmente.

4. Drucklack nach den Ansprüchen 1 oder 3, enthaltend:
6 bis 10 Gew.-Teile Styrol-Methacrylsäureester-Copolymer, und/oder C₁-C₄-Methacrylatester, als wäßrige Dispersion,
11 bis 13 Gew.-Teile Styrol-Methacrylsäureester-Copolymer und/oder Vinylpropionat/Vinylpyrrolidon-Copolymere und/oder C₁-C₄-Methacrylatester als neutralisierbare wasserlösliche Festharze,
15 bis 25 Gew.-Teile Glykole oder Alkohole oder Glykolether/etherester
1 bis 3 Gew.-Teile Netzmittel
1 bis 5 Gew.-Teile Neutralisationsmittel
1 bis 3 Gew.-Teile Wachse
0,005 bis 0,02 Gew.-Teile Entschäumer
5 bis 20 Gew.-Teile Wasser
25 bis 45 Gew.-Teile Aluminium-, Glimmer- und/oder Goldbronze-Pigmente.

5. Drucklack nach Anspruch 1, insbesondere zur Verwendung in Lackieraggregaten und dergleichen, enthaltend:
1 bis 50 Gew.-Teile Styrol-Methacrylsäureester-Copolymer, und/oder C₁-C₄-Methacrylatester, als wäßrige Dispersion,
1 bis 40 Gew.-Teile Styrol-Methacrylsäureester-Copolymer und/oder Vinylpropionat/Vinylpyrrolidon-Copolymere und/oder C₁-C₄-Methacrylatester als neutralisierbare wasserlösliche Festharze,
0 bis 30 Gew.-Teile Glykole oder Alkohole oder Glykolether/etherester
0,1 bis 30 Gew.-Teile Netzmittel
0,1 bis 20 Gew.-Teile Neutralisationsmittel
0,1 bis 15 Gew.-Teile Wachse
0,005 bis 1 Gew.-Teile Entschäumer
1 bis 70 Gew.-Teile Wasser
10 bis 60 Gew.-Teile Aluminium-, Glimmer- und/oder Goldbronze-Pigmente.

6. Drucklack nach Anspruch 1 oder 5, enthaltend:
3 bis 30 Gew.-Teile Styrol-Methacrylsäureester-Copolymer, und/oder C₁-C₄-Methacrylatester, als wäßrige Dispersion,
3 bis 30 Gew.-Teile Styrol-Methacrylsäureester-Copolymer und/oder Vinylpropionat/Vinylpyrrolidon-Copolymere und/oder C₁-C₄-Methacrylatester als neutralisierbare wasserlösliche Festharze,
0,01 bis 15 Gew.-Teile Glykole oder Alkohole oder Glykolether/etherester
1 bis 10 Gew.-Teile Netzmittel
1 bis 10 Gew.-Teile Neutralisationsmittel
0,1 bis 10 Gew.-Teile Wachse
0,01 bis 0,15 Gew.-Teile Entschäumer
3 bis 30 Gew.-Teile Wasser
20 bis 50 Gew.-Teile Aluminium-, Glimmer- und/oder Goldbronze-Pigmente.

7. Drucklack nach den Ansprüchen 1 oder 6, enthaltend:
25 bis 30 Gew.-Teile Styrol-Methacrylsäureester-Copolymer, und/oder C₁-C₄-Methacrylatester, als wäßrige Dispersion,
3 bis 25 Gew.-Teile Styrol-Methacrylsäureester-Copolymer und/oder Vinylpropionat/Vinylpyrrolidon-Copolymere und/oder C₁-C₄-Methacrylatester als neutralisierbare wasserlösliche Festharze,
0,5 bis 5 Gew.-Teile Glykole oder Alkohole oder Glykolether/etherester
2 bis 6 Gew.-Teile Netzmittel
5 bis 10 Gew.-Teile Neutralisationsmittel
0,5 bis 5 Gew.-Teile Wachse
0,01 bis 0,15 Gew.-Teile Entschäumer
3 bis 20 Gew.-Teile Wasser
40 bis 50 Gew.-Teile Aluminium-, Glimmer- und/oder Goldbronze-Pigmente.

8. Verfahren zum Bedrucken von Papier, Pappe, Kartonagen und dergleichen unter Verwendung der Drucklacke nach den Ansprüchen 1 bis 4, dadurch gekennzeichnet, daß der Drucklack über ein Farbwerk einer Bogen- oder Rollen-Offset-Maschine in einem einzigen Arbeitsgang ohne nachfolgende Lackierung aufgetragen wird.

9. Verfahren zum Bedrucken von Papier, Pappe, Kartonagen und dergleichen unter Verwendung der Drucklacke nach den Ansprüchen 1 und 5 bis 7, dadurch gekennzeichnet, daß der Drucklack aus Feuchtwerken, separaten Lackieraggregaten von Bogen- oder Rollen-Offset-Druckmaschinen, bogenlackiermaschinen, Tief- oder Flexo-Druckmaschinen in einem einzigen Arbeitsgang ohne nachfolgende Lackierung aufgetragen wird.

## Claims

1. A water-based printing ink, in particular for gold and silver inks, containing:
from 1 to 60 parts by weight of styrene-methacrylic acid ester copolymer and/or C₁-C₄-methacrylate ester, as an aqueous dispersion,
from 1 to 40 parts by weight of styrene-methacrylic acid ester copolymer and/or vinyl propionate/vinyl pyrrolidone copolymers and/or C₁-C₄-methacrylate ester as neutralisable water-soluble solid resins,
from 0 to 60 parts by weight of glycols or alcohols or glycol ether/etherester,
from 0.1 to 30 parts by weight of wetting agent,
from 0.1 to 30 parts by weight of neutralisation agent,
from 0.1 to 30 parts by weight of natural and/or synthetic waxes,
from 0.001 to 2 parts by weight of anti-foam agent,
from 0 to 80 parts by weight of water, and
from 1 to 60 parts by weight of aluminium, mica and/or gold bronze pigments.

2. A printing ink according to claim 1, in particular for use in inking mechanisms, for example of offset printing machines and the like, containing:
from 1 to 30 parts by weight of styrene-methacrylic acid ester copolymer and/or C₁-C₄-methacrylate ester, as an aqueous dispersion,
from 5 to 40 parts by weight of styrene-methacrylic acid ester copolymer and/or vinyl propionate/vinyl pyrrolidone copolymers and/or C₁-C₄-methacrylate ester as neutralisable water-soluble solid resins,
from 5 to 40 parts by weight of glycols or alcohols or glycol ether/etherester,
from 0.5 to 20 parts by weight of wetting agent,
from 0.5 to 15 parts by weight of neutralisation agent,
from 0.5 to 15 parts by weight of waxes,
from 0.001 to 1 part by weight of anti-foam agent,
from 0 to 40 parts by weight of water, and
from 10 to 60 parts by weight of aluminium, mica and/or gold bronze pigments.

3. A printing ink according to claim 1 or claim 2, containing:
from 5 to 12 parts by weight of styrene-methacrylic acid ester copolymer and/or C₁-C₄-methacrylate ester as an aqueous dispersion,
from 10 to 15 parts by weight of styrene-methacrylic acid ester copolymer and/or vinyl propionate/vinyl pyrrolidone copolymers and/or C₁-C₄-methacrylate ester as neutralisable water-soluble solid resins,
from 10 to 30 parts by weight of glycols or alcohols or glycol ether/etherester,
from 1 to 8 parts by weight of wetting agent,
from 1 to 8 parts by weight of neutralisation agent,
from 1 to 8 parts by weight of waxes,
from 0.005 to 0.15 parts by weight of anti-foam agent,
from 5 to 20 parts by weight of water, and
from 20 to 50 parts by weight of aluminium, mica and/or gold bronze pigments.

4. A printing ink according to claim 1 or 3 containing:
from 6 to 10 parts by weight of styrene-methacrylic acid ester copolymer and/or C₁-C₄-methacrylate ester as an aqueous dispersion,
from 11 to 13 parts by weight of styrene-methacrylic acid ester copolymer and/or vinyl propionate/vinyl pyrrolidone copolymers and/or C₁-C₄-methacrylate ester as neutralisable water-soluble solid resins,
from 15 to 25 parts by weight of glycols or alcohols or glycol ether/etherester,
from 1 to 3 parts by weight of wetting agent,
from 1 to 5 parts by weight of neutralisation agent,
from 1 to 3 parts by weight of waxes,
from 0.005 to 0.02 parts by weight of anti-foam agent,
from 5 to 20 parts by weight of water, and
from 25 to 45 parts by weight of aluminium, mica and/or gold bronze pigments.

5. A printing ink according to claim 1, in particular for use in lacquering assemblies and the like, containing:
from 1 to 50 parts by weight of styrene-methacrylic acid ester copolymer and/or C₁-C₄-methacrylate ester as an aqueous dispersion,
from 1 to 40 parts by weight of styrene-methacrylic acid ester copolymer and/or vinyl propionate/vinyl pyrrolidone copolymers and/or C₁-C₄-methacrylate ester as neutralisable water-soluble solid resins,
from 0 to 30 parts by weight of glycols or alcohols or glycol ether/etherester,
from 0.1 to 30 parts by weight of wetting agent,
from 0.1 to 20 parts by weight of neutralisation agent,
from 0.1 to 15 parts by weight of waxes,
from 0.005 to 1 part by weight of anti-foam agent,
from 1 to 70 parts by weight of water, and
from 10 to 60 parts by weight of aluminium, mica and/or gold bronze pigments.

6. A printing ink according to claim 1 or claim 5, containing:
from 3 to 30 parts by weight of styrene-methacrylic acid ester copolymer and/or C₁-C₄-methacrylate ester as an aqueous dispersion,
from 3 to 30 parts by weight of styrene-methacrylic acid ester copolymer and/or vinyl propionate/vinyl pyrrolidone copolymers and/or C₁-C₄-methacrylate ester as neutralisable water-soluble solid resins,
from 0.01 to 15 parts by weight of glycols or alcohols or glycol ether/etherester,
from 1 to 10 parts by weight of wetting agent,
from 1 to 10 parts by weight of neutralisation agent,
from 0.1 to 10 parts by weight of waxes,
from 0.01 to 0.15 parts by weight of anti-foam agent,
from 3 to 30 parts by weight of water, and
from 20 to 50 parts by weight of aluminium, mica and/or gold bronze pigments.

7. A printing ink according to claim 1 or claim 6, containing:
from 25 to 30 parts by weight of styrene-methacrylic acid ester copolymer and/or C₁-C₄-methacrylate ester as an aqueous dispersion,
from 3 to 25 parts by weight of styrene-methacrylic acid ester copolymer and/or vinyl propionate/vinyl pyrrolidone copolymers and/or C₁-C₄-methacrylate ester as neutralisable water-soluble solid resins,
from 0.5 to 5 parts by weight of glycols or alcohols or glycol ether/etherester,
from 2 to 6 parts by weight of wetting agent,
from 5 to 10 parts by weight of neutralisation agent,
from 0.5 to 5 parts by weight of waxes,
from 0.01 to 0.15 parts by weight of anti-foam agent,
from 3 to 20 parts by weight of water, and
from 40 to 50 parts by weight of aluminium, mica and/or gold bronze pigments.

8. A method of printing on paper, cardboard, cardboard packaging and the like using the printing ink according to claims 1 to 4 characterised in that the printing ink is applied by way of an inking mechanism of a sheet-fed or roll-fed offset machine in a single working operation without subsequent lacquering.

9. A method of printing on paper, cardboard, cardboard packaging and the like using the printing ink according to claims 1 and 5 to 7 characterised in that the printing ink is applied from moistening mechanisms, separate lacquering assemblies of sheet-fed or roll-fed offset printing machines, sheet lacquering machines, intaglio or flexographic printing machines in a single working operation without subsequent lacquering.

## Revendications

1. Encre d'imprimerie à base d'eau, en particulier pour des couleurs or et argent, contenant :
1 à 60 parties en poids de copolymère styrène-esterméthacrylique et/ou de méthacrylate en C₁-C₄ sous forme de dispersion aqueuse,
1 à 40 parties en poids de copolymère styrène-esterméthacrylique et/ou de copolymères propionate de vinyle/vinyle-pyrrolidone et/ou de méthacrylate en C₁-C₄ sous forme de résines solides neutralisables solubles dans l'eau,
0 à 60 parties en poids de glycols ou d'alcools ou d'éthers/étheresters de glycol,
0,1 à 30 parties en poids d'agent mouillant
0,1 à 30 parties en poids d'agent neutralisant
0,1 à 30 parties en poids de cires naturelles et/ou synthétiques
0,001 à 2 parties en poids d'antimousse
0 à 80 parties en poids d'eau
1 à 60 parties en poids de pigments d'aluminium, de mica et/ou de bronze d'or.

2. Encre d'imprimerie selon la revendication 1, en particulier pour l'utilisation dans des mécanismes d'encrage, par exemple de machine d'impression Offset, etc., contenant :
1 à 30 parties en poids de copolymère styrène-esterméthacrylique et/ou de méthacrylate en C₁-C₄ sous forme de dispersion aqueuse,
5 à 40 parties en poids de copolymère styrène-esterméthacrylique et/ou de copolymères propionate de vinyle/vinyle-pyrrolidone et/ou de méthacrylate en C₁-C₄ sous forme de résines solides neutralisables solubles dans l'eau,
5 à 40 parties en poids de glycols ou d'alcools ou d'éthers/étheresters de glycol,
0,5 à 20 parties en poids d'agent mouillant,
0,5 à 15 parties en poids d'agent neutralisant,
0,5 à 15 parties en poids de cires,
0,001 à 1 partie en poids d'antimousse,
0 à 40 parties en poids d'eau,
10 à 60 parties en poids de pigments d'aluminium, de mica et/ou de bronze d'or.

3. Encre d'imprimerie selon la revendication 1 ou 2, contenant :
5 à 12 parties en poids de copolymère styrène-esterméthacrylique et/ou de méthacrylate en C₁-C₄ sous foie de dispersion aqueuse,
10 à 15 parties en poids de copolymère styrène-esterméthacrylique et/ou de copolymères propionate de vinyle/vinyle-pyrrolidone et/ou de méthacrylate en C₁-C₄ sous foie de résines solides neutralisables solubles dans l'eau,
10 à 30 parties en poids de glycols ou d'alcools ou d'éthers/étheresters de glycol,
1 à 8 parties en poids d'agent mouillant,
1 à 8 parties en poids d'agent neutralisant,
1 à 8 parties en poids de cires,
0,005 à 0,15 partie en poids d'antimousse,
5 à 20 parties en poids d'eau,
20 à 50 parties en poids de pigments d'aluminium, de
mica et/ou de bronze d'or.

4. Encre d'imprimerie selon la revendication 1 ou 3, contenant :
6 à 10 parties en poids de copolymère styrène-esterméthacrylique et/ou de méthacrylate en C₁-C₄ sous foie de dispersion aqueuse,
11 à 13 parties en poids de copolymère styrène-esterméthacrylique et/ou de copolymères propionate de vinyle/vinyle-pyrrolidone et/ou de méthacrylate en C₁-C₄ sous forme de résines solides neutralisables solubles dans l'eau,
15 à 25 parties en poids de glycols ou d'alcools ou d'éthers/étheresters de glycol,
1 à 3 parties en poids d'agent mouillant,
1 à 5 parties en poids d'agent neutralisant,
1 à 3 parties en poids de cires,
0,005 à 0,02 partie en poids d'antimousse,
5 à 20 parties en poids d'eau,
25 à 45 parties en poids de pigments d'aluminium, de mica et/ou de bronze d'or.

5. Encre d'imprimerie selon la revendication 1, en particulier pour l'utilisation dans des ensembles de laquage, etc. contenant :
1 à 50 parties en poids de copolymère styrène-esterméthacrylique et/ou de méthacrylate en C₁-C₄ sous forme de dispersion aqueuse,
1 à 40 parties en poids de copolymère styrène-esterméthacrylique et/ou de copolymères propionate de vinyle/vinyle-pyrrolidone et/ou de méthacrylate en C₁-C₄ sous foie de résines solides neutralisables solubles dans l'eau,
0 à 30 parties en poids de glycols ou d'alcools ou d'éthers/étheresters de glycol,
0,1 à 30 parties en poids d'agent mouillant,
0,1 à 20 parties en poids d'agent neutralisant,
0,1 à 15 parties en poids de cires,
0,005 à 1 partie en poids d'antimousse,
1 à 70 parties en poids d'eau,
10 à 60 parties en poids de pigments d'aluminium, de mica et/ou de bronze d'or.

6. Encre d'imprimerie selon la revendication 1 ou 5 contenant :
3 à 30 parties en poids de copolymère styrène-esterméthacrylique et/ou de méthacrylate en C₁-C₄ sous foie de dispersion aqueuse,
3 à 30 parties en poids de copolymère styrène-esterméthacrylique et/ou de copolymères propionate de vinyle/vinyle-pyrrolidone et/ou de méthacrylate en C₁-C₄ sous foie de résines solides neutralisables solubles dans l'eau,
0,01 à 15 parties en poids de glycols ou d'alcools ou d'éthers/étheresters de glycol,
1 à 10 parties en poids d'agent mouillant,
1 à 10 parties en poids d'agent neutralisant,
0,1 à 10 parties en poids de cires,
0,01 à 0,15 partie en poids d'antimousse,
3 à 30 parties en poids d'eau,
20 à 50 parties en poids de pigments d'aluminium, de mica et/ou de bronze d'or.

7. Encre d'imprimerie selon la revendication 1 ou 6, contenant :
25 à 30 parties en poids de copolymère styrène-esterméthacrylique et/ou de méthacrylate en C₁-C₄ sous foie de dispersion aqueuse,
3 à 25 parties en poids de copolymère styrène-esterméthacrylique et/ou de copolymères propionate de vinyle/vinyle-pyrrolidone et/ou de méthacrylate en C₁-C₄ sous forme de résines solides neutralisables solubles dans l'eau,
0,5 à 5 parties en poids de glycols ou d'alcools ou d'éthers/étheresters de glycol,
2 à 6 parties en poids d'agent mouillant,
5 à 10 parties en poids d'agent neutralisant,
0,5 à 5 parties en poids de cires,
0,01 à 0,15 partie en poids d'antimousse,
3 à 20 parties en poids d'eau,
4O à 5O parties en poids de pigments d'aluminium, de mica et/ou de bronze d'or.

8. Procédé d'impression du papier, du carton, des cartonnages, etc ..., en utilisant la laque d'impression selon les revendications 1 à 4, caractérisé en ce que la laque d'impression est appliquée au moyen du mécanisme d'encrage d'une machine Offset pour imprimer les feuilles ou les bobines en un seul passage sans laquage ultérieur.

9. Procédé d'impression du papier, du carton, des cartonnages, etc ..., en utilisant la laque d'impression selon les revendications 1 et 5 à 7, caractérisé en ce que la laque d'impression est appliquée en un seul passage, sans laquage ultérieur, au moyen de dispositifs de mouillage, d'ensembles de laquage séparés de machines Offset pour imprimer les feuilles ou les bobines, de machines d'impression hélio ou flexo.
